# FASCICULE DE BREVET EUROPEEN

(11) **EP 3 154 643 B1**
(45) Date de publication et mention de la délivrance du brevet: **24.11.2021**
(21) Numéro de dépôt: 15726149.6
(22) Date de dépôt: 02.06.2015
(51) Int. Cl.: A62B 1/14

(54) **APPAREIL DE SUSPENSION D'UNE CHARGE À UN FILIN**
VORRICHTUNG ZUR AUFHÄNGUNG EINER LAST AN EINEM SEIL
APPARATUS FOR SUSPENDING A LOAD ON A ROPE

(30) Priorité: 11.06.2014 FR 1455283
(43) Date de publication de la demande: 19.04.2017
(73) Titulaire: TAZ, 38660 Saint Vincent de Mercuze (FR)
(72) Inventeur: OLLIVIER, Pascal, 38330 St Nazaire les Eymes (FR)
(74) Mandataire: Casalonga
(86) Numéro de dépôt international: PCT/EP2015/062207
(87) Numéro de publication internationale: WO 2015/189066

(56) Documents cités:
- EP-A1- 0 398 819
- EP-A1- 1 834 672
- EP-A1- 2 301 631
- FR-A1- 2 626 184

## Description

La présente invention concerne le domaine des appareils de suspension d'une charge sur filin, pouvant constituer un descendeur autobloquant.

Dans l'état actuel de la technique, il existe deux types de descendeurs autobloquants, ceux qui sont adaptés pour être installés sur des filins tendus, c'est-à-dire sur des filins qui sont tendus entre un point supérieur d'ancrage et un point inférieur d'ancrage, et ceux qui sont adaptés pour être installés sur des filins dit « mous », c'est-à-dire sur des filins qui sont accrochés uniquement à un point supérieur d'ancrage.

Le brevet EP 2 301 631 décrit un appareil de suspension dans lequel un filin peut être pris entre un organe fixe et un organe culbuteur. Lorsque l'organe culbuteur est éloigné de l'organe fixe, sous l'effet d'un levier de déblocage, le filin peut être libéré. Le levier de déblocage est spécifiquement monté sur le corps de l'appareil pour successivement engendrer lors de sa course, deux forces de valeurs différentes sur l'organe culbuteur afin de produire un effet de démultiplication dans une partie initiale de sa course.

La présente invention a pour but de proposer un appareil de suspension d'une charge pouvant constituer un descendeur autobloquant, susceptible d'être installé aussi bien sur un filin tendu que sur un filin mou.

Selon un mode de réalisation, il est proposé un appareil de suspension d'une charge à un filin de suspension, qui comprend un corps muni d'un moyen d'accrochage de la charge et muni d'un organe fixe et d'un organe culbuteur pivotant, entre lesquels passe le filin et aptes à immobiliser le corps le long du filin lors d'un basculement dudit corps dans un sens sous l'effet de la charge.

Ledit corps est en outre muni d'une butée fixe et d'un levier de déblocage monté pivotant sur ledit corps, ledit levier de déblocage étant apte à agir sur l'organe culbuteur pivotant pour faire pivoter ce dernier par rapport audit corps jusqu'à ladite butée et pour faire basculer en sens opposé ledit corps lorsque l'organe culbuteur est en appui contre ladite butée.

Grâce à l'existence de ladite butée fixe, le pivotement de l'organe culbuteur est limité dans le sens du déblocage, de sorte que le levier de déblocage peut, dans une première étape, engendrer le basculement de l'organe culbuteur vers ladite butée fixe, puis, dans une seconde étape, engendrer un basculement du corps en sens inverse lorsque l'organe culbuteur est en appui sur ladite butée et ne peut plus pivoter par rapport au corps, si bien que, lors de cette seconde étape, le corps, l'organe culbuteur et le levier de déblocage sont liés entre eux et immobiles les uns par rapport aux autres.

L'organe culbuteur peut présenter une partie de pincement située en vis-à-vis d'une partie de pincement de l'organe fixe et une partie d'appui éloignée de sa partie de pincement de façon qu'une portion intermédiaire du filin s'étende au travers d'un intervalle de passage séparant lesdites parties de pincement et devant ladite partie d'appui.

Ledit moyen d'accrochage de la charge peut être situé du côté de l'organe fixe par rapport au filin et du côté de la partie d'appui de l'organe culbuteur par rapport audit intervalle de passage.

Ainsi, sous l'effet de la charge suspendue, ladite portion intermédiaire du filin peut être déviée par rapport à un brin tendu du filin et peut agir sur ladite partie d'appui de l'organe culbuteur dans le sens qui tend à rapprocher les parties de pincement, de façon à produire un effet de pincement local du filin de suspension entre ces parties de pincement.

Ladite butée ? pour l'organe culbuteur peut limiter à un écartement maximum l'intervalle de passage entre lesdites parties de pincement.

Ledit levier de déblocage peut être apte à agir sur l'organe culbuteur dans le sens de l'éloignement desdites parties de pincement lorsque ledit levier de déblocage est pivoté par rapport au corps dans le sens opposé au sens de pivotement de l'organe culbuteur.

Ledit levier de déblocage peut être apte à induire un basculement du corps dans le sens de la réduction de la déviation de la portion intermédiaire du filin de suspension par rapport audit brin tendu lorsque l'organe culbuteur est en appui contre ladite butée sous l'effet dudit levier de déblocage.

Ledit organe culbuteur peut comprendre des bras opposés présentant ladite partie de pincement et ladite partie d'appui.

Ledit levier de déblocage peut présenter une extrémité engagée dans un évidement de l'extrémité du bras de l'organe culbuteur présentant ladite partie de pincement.

Ledit corps peut comprendre des flasques présentant des passages correspondants d'accrochage de la charge.

Un appareil de suspension d'une charge à un filin de suspension va maintenant être décrit à titre d'exemple non limitatif, illustré par le dessin annexé sur lequel :
- la figure 1 représente une vue latérale partielle de l'appareil de suspension en position de mise en place, un flasque pivotant étant enlevé ;
- la figure 2 représente une vue latérale partielle de l'appareil de suspension en position de mise en place, le flasque pivotant étant en position d'ouverture ;
- la figure 3 représente une vue latérale de l'appareil de suspension en position de mise en place, le flasque pivotant étant en position de fermeture ;
- la figure 4 représente une vue latérale partielle de l'appareil de suspension en position de blocage et d'immobilisation ;
- la figure 5 représente une vue latérale partielle de l'appareil de suspension dans une première position de déblocage partiel ; et
- la figure 6 représente une vue latérale partielle de l'appareil de suspension dans une seconde position de déblocage partiel.

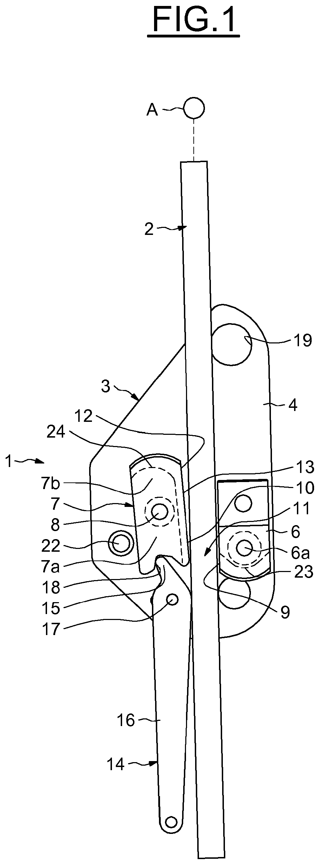

Comme illustré sur les figures 1 à 3, un appareil de suspension 1 d'une charge sur un filin 2, par exemple une corde, comprend un corps 3 qui comprend un flasque porteur 4 et un flasque pivotant 5 qui s'étendent parallèlement.

Entre ces derniers, le flasque 4 est muni d'un organe fixe 6 et d'un organe culbuteur 7 monté de façon pivotante autour d'un axe 8 perpendiculaire au flasque 4, de façon que l'organe culbuteur 7 puisse pivoter parallèlement aux flasques 4 et 5, et qui présente, de part et d'autre de cet axe 8, des bras opposés 7a et 7b.

L'organe fixe 6 et le bras 7a de l'organe culbuteur 7 présentent, du côté de leurs extrémités, des parties de pincement 9 et 10 situées en vis-à-vis l'une de l'autre de façon à déterminer entre elles un intervalle de passage 11.

Le bras 7b de l'organe culbuteur 7 présente, du côté de son extrémité, une partie d'appui 12 éloignée de sa partie de pincement 10 et située à distance de l'intervalle de passage 11.

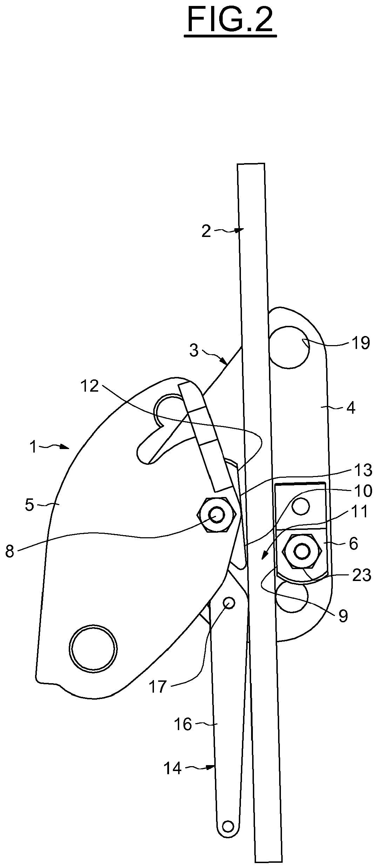

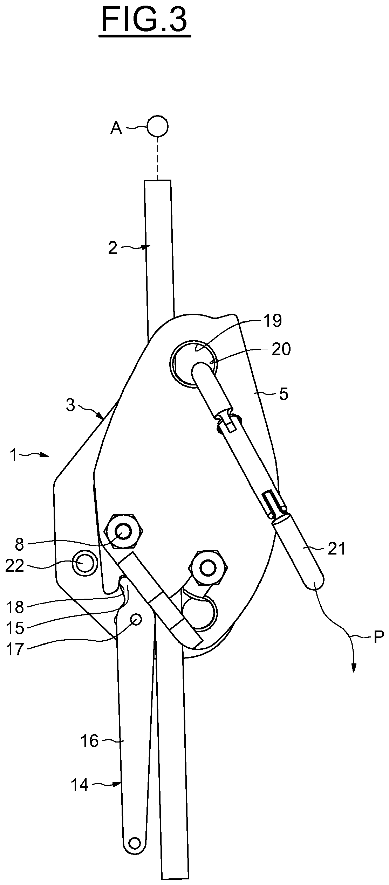

Le flasque 5 est monté de façon pivotante, par rapport au flasque 4, sur l'axe 8, entre une position d'ouverture (figure 2) dans laquelle une portion du filin 2 peut être mise en place latéralement et s'étendre parallèlement aux flasques 4 et 5, entre l'organe fixe 6 et l'organe culbuteur 7 et une position de fermeture ou de fonctionnement (figure 3) dans laquelle il recouvre le filin 2. Dans cette position de fermeture ou de fonctionnement, le flasque 5 vient buter contre un élément de fixation 6a de l'organe fixe 6 sur le flasque 4.

Les flasques 4 et 5 présentent des contours correspondants de telle sorte que, dans ladite position de fermeture ou de fonctionnement, ils sont superposés.

Lorsque le filin 2, disposé de façon rectiligne, est mis en place, il passe au travers de l'intervalle de passage 11, entre les parties de pincement de 10, et devant la partie d'appui 12. Une zone 13 de l'organe culbuteur 7 joignant la partie de pincement 10 et la partie d'appui 12 longe le filin 2. Dans cette position de mise en place, l'appareil de suspension 1 peut être déplacé librement le long du filin 2.

Le corps 3 est muni d'un levier de déblocage 14 qui comprend une partie 15 qui est engagée entre les flasques 4 et 5 et une partie 16 qui s'étend largement à l'extérieur de l'espace séparant les flasques 4 et 5 de façon à former un bras de manœuvre.

La partie 15 du levier de déblocage 14 est montée sur le flasque 4 par l'intermédiaire d'un axe 17 perpendiculaire à ce dernier de façon que le levier de déblocage 14 puisse pivoter parallèlement aux flasques 4 et 5.

L'axe 17 est disposé de façon que la partie 15 du levier de déblocage 14 s'étende vers l'extrémité du bras 7a de l'organe culbuteur 7 et que l'extrémité de cette partie 15 soit engagée dans un évidement 18 aménagé à l'extrémité du bras 7a, à proximité de la partie de pincement 10, de façon à coopérer pour que l'organe basculeur 7 et le levier de déblocage 14 pivotent en sens inverse.

Dans ladite position de mise en place, le levier de déblocage 14 s'étend approximativement parallèlement au filin 2.

Le corps 3 présente en outre des moyens d'accrochage d'une charge qui comprennent des passages d'accrochage 19 et 20 qui sont aménagés dans les flasques 4 et 5 et qui sont en face l'un de l'autre lorsque les flasques 4 et 5 sont dans ladite position de fermeture ou de fonctionnement.

Dans lesdites positions de mise en place et de fermeture (figures 1 et 3), les passages 19 et 20 sont disposées du même côté que l'organe fixe 6 par rapport au filin 2 et sont situés du côté de la partie d'appui 12 par rapport à l'intervalle de passage 11, en étant plus éloignés de cet intervalle de passage 11 que la partie d'appui 12, par exemple deux fois plus loin.

Les moyens d'accrochage précités comprennent en outre un mousqueton 21 passant au travers des passages d'accrochage 19 et 20, sur lequel la charge peut être accrochée par exemple grâce à une corde intermédiaire.

Le corps 3 est en outre muni d'une butée fixe 22 qui est fixée sur le flasque 4 et contre laquelle le bras 7a de l'organe culbuteur 7 peut venir en appui de façon à limiter à un écartement maximum l'intervalle de passage 11 entre les parties de pincement 9 et 10.

Par ailleurs, l'organe fixe 6 présente une gorge d'appui 23 aménagée dans la zone de sa partie de pincement 9 et l'organe culbuteur 7 présente une gorge d'appui 24 aménagée dans la zone de sa partie de pincement 10, de sa zone médiane 13 et de sa partie d'appui 12. Ces gorges 23 et 24 sont aptes à recevoir latéralement le filin 2, sur une faible épaisseur.

On va maintenant décrire comment fonctionne l'appareil de suspension 1.

Dans une situation d'origine illustrée sur les figures 1 et 3, l'appareil de suspension 1 est mis en place sur un filin 2 dont une extrémité supérieure est accrochée à un point d'ancrage A et une charge P, par exemple un utilisateur, est accrochée au mousqueton 21 sans solliciter l'appareil de suspension.

En supposant que le filin 2 s'étende verticalement, alors les parties de pincement 9 et 10 sont décalées horizontalement, des bras 7a et 7b du levier culbuteur 7 s'étendent respectivement vers le bas et vers le haut par rapport à l'axe 8, les passages 19 et 20 sont au-dessus et à distance de l'organe fixe 6 et sont plus haut que la partie d'appui 12 du levier culbuteur 7 et le bras de manœuvre 16 du levier de déblocage 14 s'étend vers le bas.

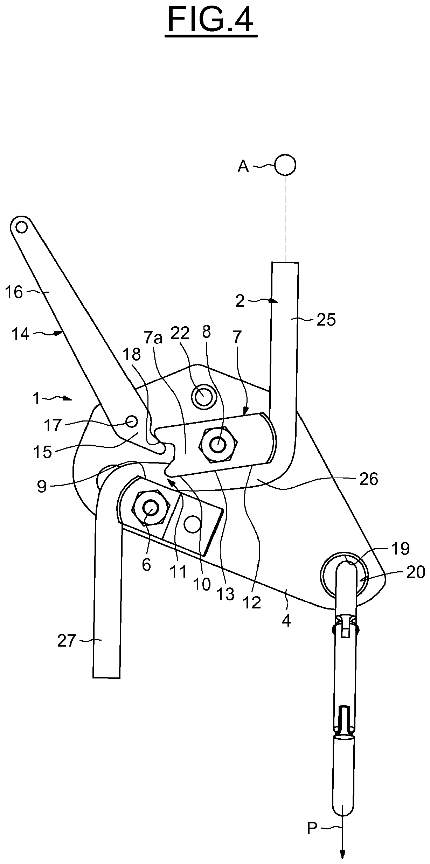

La charge P passant à l'état suspendu à l'appareil de suspension 1, l'appareil de suspension 1 atteint une position bloquée en un endroit le long du filin 2, illustrée sur la figure 4.

Cette position bloquée est atteinte de la manière suivante.

Sous l'effet de la charge P, l'appareil de suspension 1 bascule verticalement dans le sens qui éloigne les passages d'accrochage 19 et 20 traversés par le mousqueton 21 par rapport au filin 2, en étant retenu de la manière suivante.

Le filin 2 présente un brin supérieur tendu 25 qui s'étend entre le point d'ancrage A et la partie d'appui 12 de l'organe culbuteur 7.

La portion intermédiaire 26 du filin 2, qui s'étend entre la partie d'appui 12 de l'organe culbuteur 7 et l'intervalle de passage 11 est tendue et est déviée par rapport à la direction du brin tendu 25.

La déviation induite entre le brin tendu 25 et la portion déviée tendue 26 du filin 2, résultant du basculement de l'appareil de suspension 1, provoque une force sur la partie d'appui 12 de l'organe culbuteur 7 qui tend à éloigner cette partie d'appui 12 de la partie de pincement 9 de l'organe fixe 6 et qui tend à faire pivoter l'organe culbuteur 7 dans le sens qui rapproche les parties de pincement 9 et 10. Ce pivotement engendre un effet de pincement local du filin 2 dans l'intervalle de passage 11, entre les parties de pincement 9 et 10 de l'organe fixe 6 et de l'organe culbuteur 7. Ce pincement engendre une immobilisation de l'appareil de suspension 1 sur le filin 2.

Dans cette position de blocage et d'immobilisation, les passages d'accrochage 19 et 20 et l'intervalle de passage 11 entre les parties de pincement 9 et 10 sont situés, selon une direction horizontale, de part et d'autre de la partie d'appui 12 de l'organe culbuteur 7 sur laquelle le filin 2 est dévié entre le brin tendu 25 et la portion intermédiaire tendue 26.

L'organe culbuteur 7 ayant pivoté, le levier de déblocage 14 a pivoté dans le sens contraire.

Si maintenant un utilisateur exerce une force sur la partie 16 formant un bras de manœuvre du levier de déblocage 14, de façon à faire pivoter ce dernier par rapport au corps 3 dans le sens contraire de celui correspondant au basculement précité de l'appareil de suspension 1, l'extrémité de la partie 15 du levier de déblocage 14 agit sur une paroi de l'évidement 18 du bras 7a de l'organe culbuteur 7 et fait pivoter ce dernier, à l'encontre de la force exercée par le filin 2 sur la partie d'appui 12, dans le sens qui éloigne la partie de pincement 10 de l'organe de culbuteur 7 par rapport à la partie de pincement 9 de l'organe fixe 6, provoquant ainsi un accroissement de la distance entre les parties de pincement 9 et 10 et en conséquence une réduction de l'effet de pincement du filin 2 dans l'intervalle de passage 11 et un déblocage partiel.

L'effet de pincement étant réduit, l'appareil de suspension 1 glisse vers le bas le long du filin 2 sous l'effet de la charge P suspendue et constitue ainsi un appareil descendeur.

En contrôlant la force qu'il exerce sur le levier de déblocage 14 et ainsi son pivotement, l'utilisateur peut adapter l'effet de pincement précité de façon à contrôler la vitesse de la descente.

Dès que l'utilisateur relâche le levier de déblocage 14, l'effet de blocage et d'immobilisation de l'appareil de suspension 1 le long du filin 2, décrit plus haut, se produit.

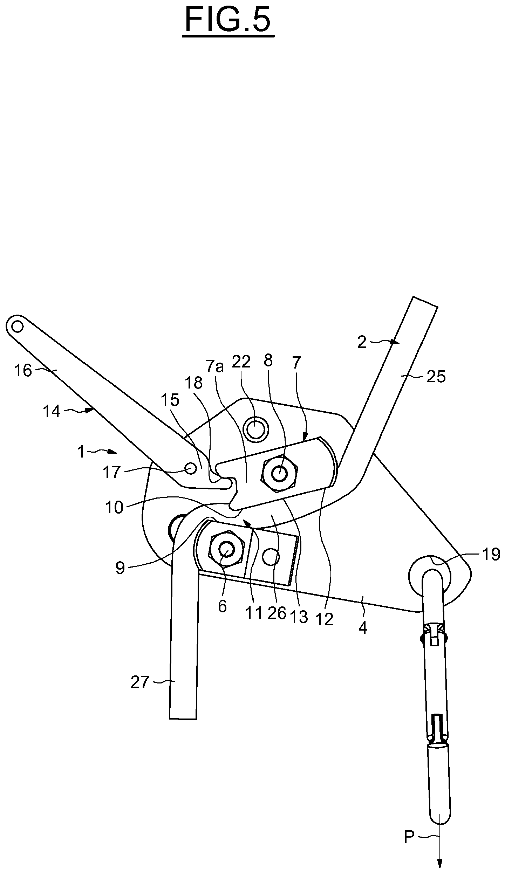

Comme illustré sur la figure 5, le déblocage partiel de l'appareil de suspension 1 peut être obtenu lorsque l'organe culbuteur 7, sollicité par le levier de déblocage 14, se trouve encore à distance de la butée 22.

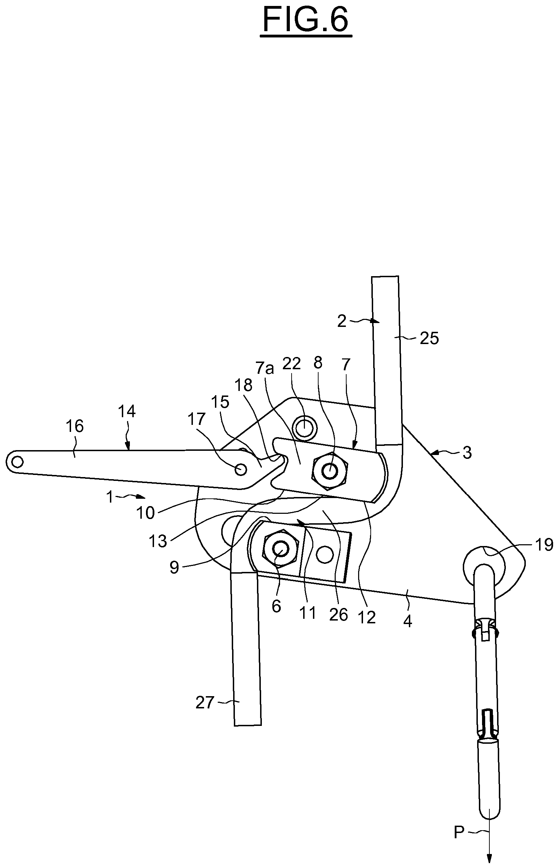

Comme illustré sur la figure 6, le déblocage partiel de l'appareil de suspension 1 peut être obtenu lorsque l'organe culbuteur 7, sollicité par le levier de déblocage 14, atteint la butée 22 et devient solidaire, dans un sens, du corps 3 et que l'utilisateur poursuit son action sur le levier de déblocage 14 de façon à faire basculer le corps 3 par rapport au filin 2 dans le sens contraire à celui ayant permis d'atteindre sa position de blocage et d'immobilisation par rapport à sa position d'origine précitée, réduisant ainsi la déviation de la portion intermédiaire tendue 26 par rapport au brin supérieur tendu 25.

Ainsi, l'appareil de suspension 1 présente deux capacités de déblocage sous l'effet du levier de déblocage 14.

L'une de ces capacités résulte de ce que le déblocage peut être obtenu lorsque l'organe culbuteur 7 est pivoté par rapport au corps 3 entre sa position de pincement du filin 2 et la butée 22.

L'autre capacité résulte de ce que le déblocage peut être obtenu lorsque l'organe culbuteur 7 est amené d'abord en appui contre la butée 22 puis que le corps 3 est basculé du fait de cet appui sous l'effet du levier de déblocage 14. Lors de ce basculement, le corps 3, l'organe culbuteur 7 et le levier de déblocage 14 sont liés entre eux grâce à l'existence de la butée 22 et immobiles les uns par rapport aux autres.

Le dimensionnement et l'agencement des différentes pièces constituant l'appareil de suspension 1, en liaison avec les caractéristiques physiques du filin 2, sont adaptés de façon que les effets décrits ci-dessus soient atteints.

Il résulte de ce qui précède que l'appareil de suspension 1 peut être utilisé aussi bien sur un filin 2 dit « mou », c'est-à-dire sur un filin présentant un brin inférieur 27 libre s'étendant au-dessous de l'appareil de suspension 1, que sur un filin 2 dit « tendu », c'est-à-dire sur un filin présentant un brin inférieur 27 tendu dont l'extrémité inférieure est accrochée à un point d'ancrage inférieur.

La présente invention ne se limite pas à l'exemple ci-dessus décrit.

## Revendications

1. Appareil de suspension d'une charge à un filin de suspension, comprenant un corps (3) muni d'un moyen d'accrochage (19, 20) de la charge et muni d'un organe fixe (6) et d'un organe culbuteur pivotant (7), entre lesquels passe le filin (2) et aptes à immobiliser le corps le long du filin (2) lors d'un basculement dudit corps dans un sens sous l'effet de la charge, ledit corps (3) étant en outre muni d'une butée fixe (22) et d'un levier de déblocage (14), **caractérisé par le fait que** ledit levier de déblocage (14) est monté pivotant sur ledit corps (3), ledit levier de déblocage (14) étant apte à agir sur l'organe culbuteur pivotant (7) pour faire pivoter ce dernier par rapport audit corps jusqu'à ladite butée (22) et pour faire basculer en sens opposé ledit corps (3) lorsque l'organe culbuteur (7) est en appui contre ladite butée (22).

2. Appareil selon la revendication 1, dans lequel l'organe culbuteur (7) présente une partie de pincement (10) située en vis-à-vis d'une partie de pincement (9) de l'organe fixe et une partie d'appui (12) éloignée de sa partie de pincement de façon qu'une portion intermédiaire (26) du filin s'étende au travers d'un intervalle de passage (11) séparant lesdites parties de pincement et devant ladite partie d'appui ; dans lequel ledit moyen d'accrochage (19, 20) de la charge est situé du côté de l'organe fixe par rapport au filin et du côté de la partie d'appui de l'organe culbuteur par rapport audit intervalle de passage ; de telle sorte que, sous l'effet de la charge suspendue, ladite portion intermédiaire du filin est déviée par rapport à un brin tendu du filin et agit sur ladite partie d'appui (12) de l'organe culbuteur dans le sens qui tend à rapprocher les parties de pincement, de façon à produire un effet de pincement local du filin de suspension entre ces parties de pincement (9, 10) ; dans lequel ladite butée (22) pour l'organe culbuteur limite à un écartement maximum l'intervalle de passage (11) entre lesdites parties de pincement (9, 10), dans lequel ledit levier de déblocage (14) est apte à agir sur l'organe culbuteur (7) dans le sens de l'éloignement desdites parties de pincement (9, 10) lorsque ledit levier de déblocage (14) est pivoté par rapport au corps dans le sens opposé au sens de pivotement de l'organe culbuteur (7) ; et dans lequel ledit levier de déblocage (14) est apte à induire un basculement du corps dans le sens de la réduction de la déviation de la portion intermédiaire (26) du filin de suspension par rapport audit brin tendu (25) lorsque l'organe culbuteur est en appui contre ladite butée (22) sous l'effet dudit levier de déblocage.

3. Appareil selon la revendication 2, dans lequel ledit organe culbuteur (7) comprend des bras opposés (7a, 7b) présentant ladite partie de pincement (10) et ladite partie d'appui (12).

4. Appareil selon la revendication 3, dans lequel ledit levier de déblocage (14) présente une extrémité engagée dans un évidement (18) de l'extrémité du bras (7a) de l'organe culbuteur (7) présentant ladite partie de pincement (10).

5. Appareil selon l'une quelconque des revendications précédentes, dans lequel ledit corps (3) comprend des flasques (4, 5) présentant des passages correspondants (19, 20) d'accrochage de la charge.

## Patentansprüche

1. Vorrichtung zur Aufhängung einer Last an einem Aufhängungsseil, umfassend einen Körper (3), der mit einem Mittel zum Anhängen (19, 20) der Last versehen ist und mit einem festen Organ (6) und einem schwenkenden Kipphebelorgan (7) versehen ist, zwischen denen das Seil (2) verläuft und die imstande sind, den Körper entlang des Seils (2) bei einem Kippen des Körpers in eine Richtung unter der Wirkung der Last zu arretieren, wobei der Körper (3) ferner mit einem festen Anschlag (22) und mit einem Entsperrhebel (14) versehen ist, **dadurch gekennzeichnet, dass** der Entsperrhebel (14) schwenkend auf dem Körper (3) angebracht ist, wobei der Entsperrhebel (14) imstande ist, auf das schwenkende Kipphebelorgan (7) zu wirken, damit dieses im Verhältnis zum Körper bis zu dem Anschlag (22) schwenkt und um den Körper (3) in die entgegengesetzte Richtung zu schwenken, wenn sich das Kipphebelorgan (7) auf dem Anschlag (22) abstützt.

2. Vorrichtung nach Anspruch 1, wobei das Kipphebelorgan (7) einen Klemmteil (10) aufweist, der sich gegenüber einem Klemmteil (9) des festen Organs befindet und einen Stützteil (12), der von seinem Klemmteil derart entfernt ist, dass sich ein Übergangsabschnitt (26) des Seils durch ein Durchgangsintervall (11) erstreckt, das die Klemmteile trennt, und vor dem Stützteil; wobei sich das Mittel zum Anhängen (19, 20) der Last auf der Seite des festen Organs im Verhältnis zum Seil und auf der Seite des Stützteils des Kipphebelorgans im Verhältnis zum Durchgangsintervall befindet; so dass unter der Wirkung der aufgehängten Last der Übergangsabschnitt des Seils im Verhältnis zu einem gespannten Strang des Seils abgelenkt wird und auf den Stützteil (12) des Kipphebelorgans in die Richtung wirkt, die die Klemmteile derart annähert, dass eine lokale Klemmwirkung des Aufhängungsseils zwischen diesen Klemmteilen (9, 10) erzeugt wirkt; wobei der Anschlag (22) für das Kipphebelorgan das Durchgangsintervall (11) zwischen den Klemmteilen (9, 10) auf eine maximale Spreizung begrenzt, wobei der Entsperrhebel (14) imstande ist, auf das Kipphebelorgan (7) in Richtung der Beabstandung der Klemmteile (9, 10) zu wirken, wenn der Entsperrhebel (14) im Verhältnis zum Körper in die Richtung entgegengesetzt zur Schwenkrichtung des Kipphebelorgans (7) geschwenkt wird; und wobei der Entsperrhebel (14) imstande ist, ein Schwenken des Körpers in Richtung der Reduzierung der Ablenkung des Übergangsabschnitts (26) des Aufhängungsseils im Verhältnis zum gespannten Strang (25) zu induzieren, wenn sich das Kipphebelorgan unter der Wirkung des Entsperrhebels auf dem Anschlag (22) abstützt.

3. Vorrichtung nach Anspruch 2, wobei das Kipphebelorgan (7) gegenüberliegende Arme (7a, 7b) umfasst, die den Klemmteil (10) und den Stützteil (12) aufweisen.

4. Vorrichtung nach Anspruch 3, wobei der Entsperrhebel (14) ein Ende aufweist, das in eine Aussparung (18) des Endes des Arms (7a) des Kipphebelorgans (7) eingreift, das den Klemmteil (10) aufweist.

5. Vorrichtung nach einem der vorangehenden Ansprüche, wobei der Körper (3) Flansche (4, 5) umfasst, die entsprechende Durchgänge (19, 20) für das Anhängen der Last aufweisen.

## Claims

1. An apparatus for suspending a load on a suspension rope, comprising a body (3) provided with a means (19, 20) for attaching the load and provided with a stationary member (6) and with a pivotal rocker arm member (7), between which the rope (2) passes and which are capable of immobilizing the body along the rope (2) when said body tilts in a direction determined by the load, said body (3) also being provided with a stationary abutment(22) and with an unlocking lever (14), **characterised in that** said unlocking lever (14) is mounted pivotably on said body (3), said unlocking lever (14) being capable of acting on the pivotal rocker arm member (7) in order to cause the latter to pivot relative to said body as far as said abutment (22) and in order to cause said body (3) to tilt in the opposite direction when the rocker arm member (7) bears against said abutment (22).

2. The apparatus as claimed in claim 1, wherein the rocker arm member (7) has a pinching part (10) located facing a pinching part (9) of the stationary member and a bearing part (12) remote from its pinching part in such a manner that an intermediate portion (26) of the rope extends through a gap (11) separating said pinching parts and in front of said bearing part; wherein said means (19, 20) for attaching the load is located on the side of the stationary member relative to the rope and on the side of the bearing part of the rocker arm member relative to said gap; such that, through the effect of the suspended load, said intermediate portion of the rope is diverted relative to a taut strand of the rope and acts on said bearing part (12) of the rocker arm member in the direction that tends to bring the pinching parts closer together, in such a manner as to produce a local pinching effect on the suspension rope between these pinching parts (9, 10); wherein said abutment (22) for the rocker arm member limits the gap (11) between said pinching parts (9, 10) to a maximum separation, wherein said unlocking lever (14) is capable of acting on the rocker arm member (7) in the direction of the distancing of said pinching parts (9, 10) when said unlocking lever (14) is pivoted relative to the body in the opposite direction from the pivoting direction of the rocker arm member (7); and wherein said unlocking lever (14) is capable of causing the body to tilt in the direction of the reduction of the deviation of the intermediate portion (26) of the suspension rope relative to said taut strand (25) when the rocker arm member bears against said abutment (22) through the effect of said unlocking lever.

3. The apparatus as claimed in claim 2, wherein said rocker arm member (7) comprises opposite arms (7a, 7b) having said pinching part (10) and said bearing part (12).

4. The apparatus as claimed in claim 3, wherein said unlocking lever (14) has an end engaged in a recess (18) of the end of the arm (7a) of the rocker arm member (7) having said pinching part (10).

5. The apparatus as claimed in any one of the preceding claims, wherein said body (3) comprises plates (4, 5) having corresponding passages (19, 20) for attaching the load.
